(19)

Europäisches Patentamt

European Patent Office

Office européen des brevets

(11) **EP 4 567 251 A1**

(12) **EUROPEAN PATENT APPLICATION**

(43) Date of publication:
**11.06.2025 Bulletin 2025/24**

(21) Application number: **23307139.8**

(22) Date of filing: **05.12.2023**

(51) International Patent Classification (IPC):
**E21B 43/12** $^{(2006.01)}$     **G01V 1/30** $^{(2006.01)}$

(52) Cooperative Patent Classification (CPC):
**E21B 43/12;** E21B 2200/20; G01V 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **TotalEnergies OneTech**
  **92400 Courbevoie (FR)**
• **CNRS**
  **31055 Toulouse (FR)**

• **Cerfacs**
  **31057 Toulouse Cedex (FR)**

(72) Inventors:
• **Barrela, Eduardo**
  **64018 PAU CEDEX (FR)**
• **Berthet, Philippe**
  **64018 PAU CEDEX (FR)**
• **Zerkoune, Abbas**
  **64018 PAU CEDEX (FR)**

(74) Representative: **Plasseraud IP**
  **104 Rue de Richelieu**
  **CS92104**
  **75080 Paris Cedex 02 (FR)**

(54) **METHOD FOR MODELING THE TRANSMISSIBILITY BETWEEN GEOBODIES IN A RESERVOIR**

(57)     The disclosure refers to a method for determining a transmissibility field of a model of a reservoir comprising geobodies, the method comprising:
- receiving measured production data of the reservoir;
- receiving a model of the reservoir comprising geobodies capable of conducting a fluid and in contact with each other;
- determining at least two contact locations between two geobodies, and receiving a transmissibility field comprising at least one transmissibility value for each contact location;
- determining production data for said location of the reservoir, based on the at least one received transmissibility value of each contact location;
- based on a mismatch between the determined production data and the measured production data, updating the transmissibility field, wherein the at least one received transmissibility value of at least one contact location is updated, in order to reduce the mismatch.

FIG. 3

EP 4 567 251 A1

## Description

The present disclosure generally belongs to the field of the determination of a geological model of a subsoil.

More precisely, the present disclosure relates to a method for modeling the transmissibility between geobodies capable of conducting a fluid in a reservoir.

## Background of the disclosure

When modeling a reservoir, it is crucial to reproduce as precisely as possible the properties of the reservoir in the model, in order to be able to forecast hydrocarbon production, carbon capture and storage capacities or for groundwater management. Particular attention is paid to channels and other geobodies that may store and transport fluids such as hydrocarbons, water or carbon dioxyde.

Interactions between different geobodies in the reservoir often occur at a subresolution scale. In particular, features such as the deposit of a thin layer of a margin collapse or a debris flow in a geobody which can act as a barrier to fluid flow may occur at a scale much smaller than the size of the geobody and can considerably influence fluid flow within the geobody and in particular transmissibility between different geobodies. These subresolution features guide the flow of fluids in the reservoir and thus have a significant impact on the productive potential of the reservoir.

However, due to their subresolution nature, these features are not captured by known methods for modeling a reservoir.

A model that does not accurately represent subresolution flow barriers could overestimate the flow between two geobodies. Conversely, a model that does not adequately capture subresolution flow connectivity might underestimate the flow. These scenarios could lead to erroneous predictions of reservoir behavior.

One approach to overcoming these limitations might involve increasing the grid resolution in the model. While this could help capturing the effects of subresolution features, it comes with considerable computational costs, especially within the context of history matching where often multiple simulations are run.

J. Gaillot et al. "'LOSC' Simulation: A Key to Introduce Heterogeneities in Turbidite Channel Complexes (Offshore Congo)". In: SPE Annual Technical Conference and Exhibition. SPE. 2013, describes an approach where the transmissibility between geobodies is considered. However, in this approach, the transmissibility between different geobodies is considered as a whole, and subresolution features and individual contact locations are not taken into account.

Accordingly, a need exists for a method for properly determining the transmissibility between geobodies in a reservoir, in order to create a model of a reservoir capable of reliably forecasting fluid flow and production of fluids without significantly increasing computational costs.

## Summary

The present disclosure remedies the shortcomings of prior art.

It is disclosed a computer-implemented method for determining a transmissibility field of a model of a reservoir comprising a plurality of geobodies, the method comprising:

- receiving measured production data related to at least one location of the reservoir;
- receiving a model of the reservoir comprising a plurality of geobodies capable of conducting a fluid and in contact with each other;
- determining at least two contact locations between two geobodies among said plurality of geobodies, and receiving a transmissibility field comprising at least one transmissibility value for each contact location, each received transmissibility value being representative of a transmissibility of a fluid between the two geobodies across a respective contact location among the at least two contact locations;
- determining production data for said location of the reservoir, based on the at least one received transmissibility value of each contact location;
- based on a mismatch between the determined production data and the measured production data, updating the transmissibility field, wherein at least one received transmissibility value of at least one contact location among said at least two contact locations is updated, in order to reduce the mismatch.

The method allows determining at reasonable computational costs a transmissibility field (i.e. a plurality of transmissibility values) of a model of a reservoir comprising a plurality of geobodies. Thus, subresolution features of the geobody and their impact on transmissibility can be taken into account.

The obtained model may be populated with mechanical/geological/petrophysical parameters, and may be further submitted to fluid flow simulations. In particular, based on said transmissibility field, a fluid flow in the reservoir and the production of a fluid (e.g. hydrocarbons, water or carbon dioxyde) may be forecasted.

Having determined the updated transmissibility field, a last part of the method may be to determine a production of a fluid based on the updated transmissibility field, and output the determined production of a fluid for future use in geophysical tools (allowing for example the determination of positions where wells for fluid extraction or fluid injection should be drilled).

In an embodiment, at least one geobody of the geobodies comprises a channel.

In an embodiment, said updating of the transmissibility field in order to reduce the mismatch is carried out by an ensemble smoother with multiple data assimilation.

In an embodiment, the method further comprises at least one iteration of:

-    receiving a transmissibility field comprising at least one transmissibility value for each contact location, wherein the at least one received transmissibility value for a respective contact location in a current iteration corresponds to the at least one updated transmissibility value for said contact location of a previous iteration;
-    determining production data for said location of the reservoir, based on said received transmissibility field;
-    based on a mismatch between the determined production data and the measured production data, updating the transmissibility field, wherein at least one received transmissibility value of at least one contact location among said at least two contact locations is updated, in order to reduce the mismatch.

In an embodiment, the method further comprises:

-    receiving a plurality of transmissibility fields, each transmissibility field comprising at least one transmissibility value for each contact location;
-    determining, for each received transmissibility field, production data for said location of the reservoir, based on the respective received transmissibility field;
-    for each received transmissibility field: based on a mismatch between the respective determined production data and the measured production data, updating the transmissibility field, wherein at least one received transmissibility value of at least one contact location among said at least two contact locations is updated, in order to reduce the mismatch.

In an embodiment, the at least two contact locations comprise at least two contact regions separated from each other by at least one region in which the two geobodies are not in contact with each other, wherein receiving at least one transmissibility value for each contact location comprises receiving at least one transmissibility value for each contact region.

In an embodiment, the model of the reservoir comprises a plurality of cells, wherein the at least two contact locations comprise at least two pairs of adjacent cells, wherein each cell of a pair among said pairs of adjacent cells belongs to a different geobody, and wherein receiving at least one transmissibility value for each contact location comprises receiving a transmissibility value for each pair of adjacent cells.

In an embodiment, determining pairs of adjacent cells comprises:

-    creating a list of pairs of adjacent cells of said two geobodies;
-    filtering the list of pairs of adjacent cells in order to keep only pairs of adjacent cells belonging to different geobodies.

In an embodiment, a direction of contact is determined for each pair of adjacent cells, and determining production data for said location of the reservoir is further based on the direction of contact of the pairs of adjacent cells.

Another aspect of the present disclosure is related to a computer program product comprising instructions which, when the instructions are executed by a processing circuit, cause the processing circuit to implement a method as described above.

Another aspect of the disclosure is related to a system for determining a transmissibility field of a model of a reservoir comprising a plurality of geobodies, the system comprising:

-    a first interface for receiving measured production data related to at least one location of the reservoir;
-    a second interface for receiving a model of the reservoir comprising a plurality of geobodies capable of conducting a fluid and in contact with each other;
-    a first circuit for determining at least two contact locations between two geobodies among said plurality of geobodies, and receiving a transmissibility field comprising at least one transmissibility value for each contact location, each received transmissibility value being representative of a transmissibility of a fluid between the two geobodies across a respective contact location among the at least two contact locations;
-    a second circuit for determining production data for said location of the reservoir, based on the at least one received transmissibility value of each contact location;
-    a third circuit for updating, based on a mismatch between the determined production data and the measured production data, the transmissibility field, wherein at least one received transmissibility value of at least one contact location among said at least two contact locations is updated, in order to reduce the mismatch.

**Brief Description of Drawings**

Other features, details and advantages will be shown in the following detailed description and on the figures, on which:

**Fig. 1**

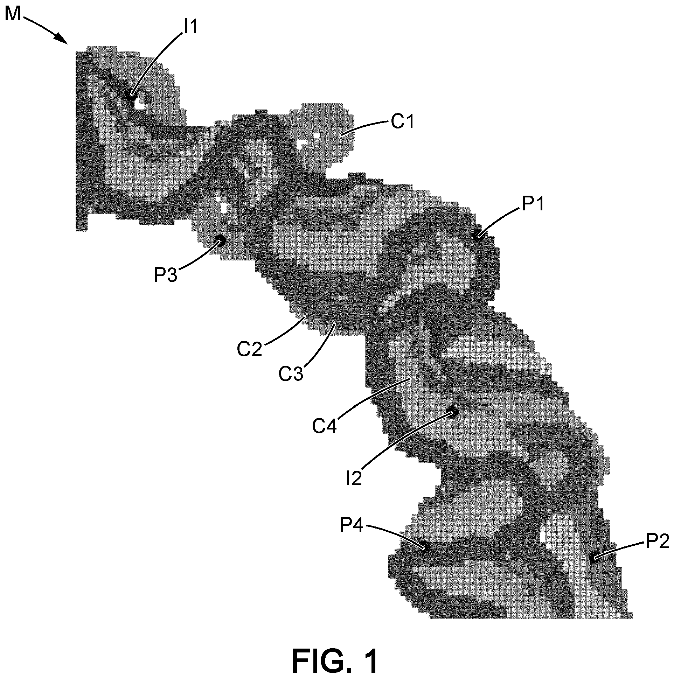

[Fig. 1] is a schematic representation of a plurality of geobodies of a model of a reservoir.

**Fig. 2**

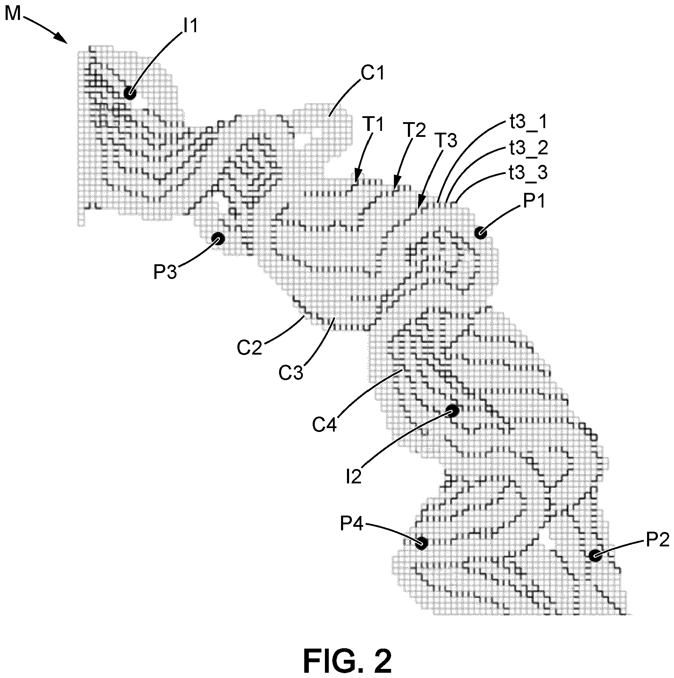

[Fig. 2] is a schematic representation of contact locations between the geobodies of figure 1.

**Fig. 3**

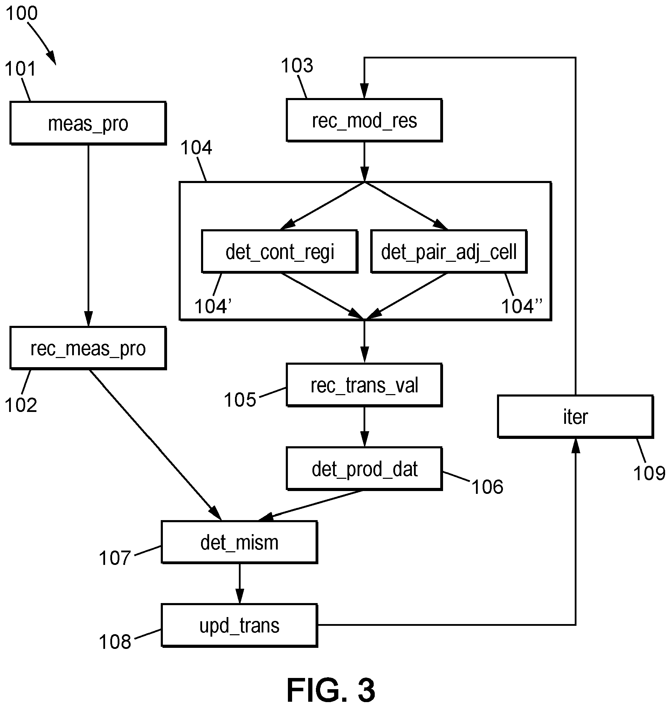

[Fig. 3] is a view of a flowchart of a method for determining a transmissibility field for the geobodies of figures 1 and 2.

**Fig. 4**

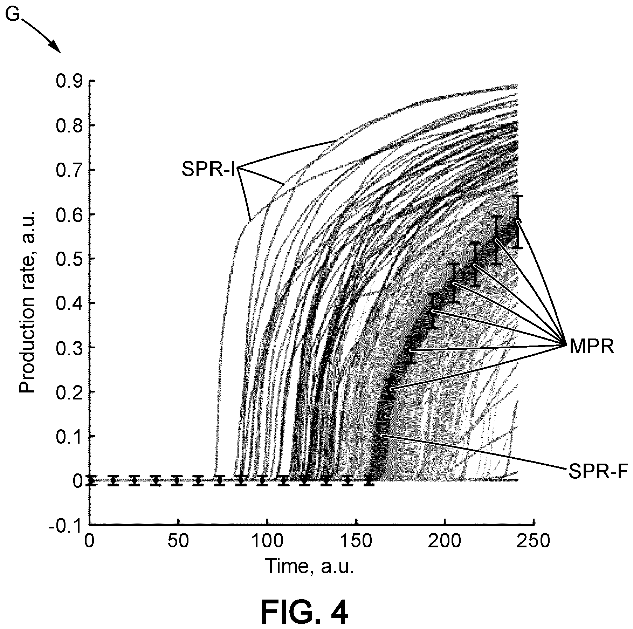

[Fig. 4] is a graph showing a curve of measured production data and curves of production data determined during different iterations of the method whose flow chart is shown in figure 3.

**Fig. 5**

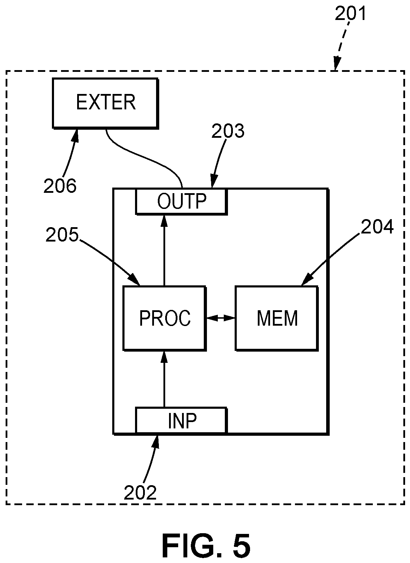

[Fig. 5] shows a system configured to implement the method whose flowchart is shown in figure 3.

**Description of Embodiments**

In the following, a method for determining a transmissibility field of a model of a reservoir comprising a geobody is presented. The method may be implemented according to several embodiments.

There exist several different approaches for modeling a reservoir.

In one possible approach, geobodies such as levees, lobes and channels may be created, wherein each geobody may be represented by parametric surfaces, in particular by NURBS (or nonuniform Rational B-Splines) surfaces. Different NURBS surfaces may be connected to each other on their respective boundaries in order to provide the shape of a given geobody. Different geobodies may then be assembled to build a model of a reservoir. The resulting model may then be meshed in order to carry out further investigation.

In another possible approach, a grid comprising a plurality of cells may be created as a support, and geobodies may then be created on the grid.

Such an approach is known from EP 2 956 804 A1 which discloses a method for modeling a reservoir in which a grid of cells is provided. Initially, the parameters of only a small number of cells will be known (those which have been actually measured) and assumed values are used for the parameters of the other cells.

Therefore, sediment transportation paths may be simulated, which may correspond to computing trajectories based on a random walk approach. The generation of trajectories of channels is further discussed in EP 2 880 471 A1. The trajectories may then be dressed with parametric surfaces to generate the geobodies.

In any of these approaches, the geobodies may be created in such a way that they are in accordance with measured data obtained from the reservoir. For example, the measured data may be petro-elastic parameters (e.g.

rock density or acoustic wave propagation velocity) or rock-physics parameters (e.g. porosity, permeability, fluid saturation, pressure or temperature) from which the petro-elastic parameters may be determined.

In order to obtain the measured data, wells may be drilled into the subsoil comprising the reservoir, and measurements of different parameters may be carried out at the location of the wells. In particular, it may be determined whether a given geobody passes through the location of a respective well or not. In addition, no flow-regions may be determined, i.e. regions where for example levees are present and where no fluid flow is possible.

The measured data may be considered as constraints that the model of the reservoir should respect. The calibration of the model of the reservoir on the measured data is referred to as history matching.

Figure 1 shows an example of a model M of a reservoir comprising a plurality of geobodies C1, C2, C3, C4 in contact with each other in several contact locations. In this example, each geobody C1, C2, C3, C4 is a channel.

Two injector wells I1, I2 and four producer wells P1, P2, P3, P4 are spread across the reservoir and are located on the geobodies C1, C2, C3, C4. Production of a fluid such as hydrocarbons, carbon or groundwater may be undertaken by the four producer wells P1, P2, P3, P4. The injector wells I1, I2 are included to assist production by injecting fluids, e.g. water, into the reservoir, helping to maintain reservoir pressure and to promote efficient extraction of the fluid throughout the reservoir.

In order for the model M to be able to correctly represent the fluid flow in the reservoir and to forecast production of fluids through producer wells P1, P2, P3, P4, the model M needs to be accurate and consistent with measured data. Therefore, the model M may be refined by using measured production data, including well and 4D - or time-lapse- seismic data, as a reference for history matching. These production data may be data related to the production of a fluid from the producer wells P1, P2, P3, P4. For example, the production data may be a production rate of a fluid (indicated for example in $m^3/s$).

The model M may be calibrated in such a way that the production data simulated for the model M are in accordance with the measured production data. In order to calibrate the model M on the measured data, a transmissibility field is used as a variable parameter for tuning the production data simulated for the model M. Thus, instead of changing the static parameters of the model M (such as porosity or permeability), the transmissibility field is perturbed in order for the model M to match the measured production data.

The transmissibility field may represent the transmissibility of fluid in the reservoir. The transmissibility is a measure of the ability of the reservoir to transmit fluids through its pores, which may be directly influenced by permeability and indirectly by porosity and further by fluid properties.

In particular, a transmissibility field related to the transmissibility of fluid across contact locations between geobodies C1, C2, C3, C4 is considered. The transmissibility between different geobodies C1, C2, C3, C4 in the reservoir can considerably influence the fluid flow in the reservoir and thus the production of fluid through producer wells P1, P2, P3, P4.

Figure 2 shows the model M of the reservoir of figure 1, wherein contact locations between different geobodies C1, C2, C3, C4 across which fluid can flow are highlighted.

The contact locations may comprise contact regions T1, T2, T3, i.e. regions in which the geobodies C1, C2, C3, C4 are in contact with each other. The contact regions T1, T2, T3 may be separated from each other by at least one non-contact region in which the respective geobodies C1, C2, C3, C4 are not in contact with each other. Each contact region T1, T2, T3 may be considered as a whole, and an individual transmissibility value may be assigned to each contact region T1, T2, T3.

The contact locations may also comprise contact points. Each contact point may be a pair t3_1, t3_2, t3_3 of adjacent cells, wherein each cell of a pair t3_1, t3_2, t3_3 of adjacent cells belongs to a different geobody C1, C2, C3, C4. The expression "contact point" does not imply that geobodies C1, C2, C3, C4 are in contact with each other only in one single contact point. It rather means that the transmissibility is considered at the scale of a pair t3_1, t3_2, t3_3 of adjacent cells, i.e. an individual transmissibility value may be assigned to each pairt3_1, t3_2, t3_3 of adjacent cells. These pairs t3_1, t3_2, t3_3 of adjacent cells may form large areas in which the geobodies C1, C2, C3, C4 are in contact with each other. In some cases, these areas of pairs t3_1, t3_2, t3_3 of adjacent cells may correspond to the above-mentioned contact regions T1, T2, T3.

The transmissibility field allows controlling the transmissibilities at contact locations of the geobodies C1, C2, C3, C4. The contact locations are locations most prone to subresolution heterogeneities (including the deposit of a thin layer of a margin collapse or a debris flow in a geobody C1, C2, C3, C4 which can act as a barrier to fluid flow) that can significantly influence fluid flow.

Tuning the transmissibility field may be considered as modifying the subresolution heterogeneities of the geobodies C1, C2, C3, C4 (such as features of the geobodies C1, C2, C3, C4 having a size smaller than the size of a cell of the grid) to better represent the impact of the heterogeneities on fluid flow.

Figure 3 shows a flowchart of the method 100 for determining a transmissibility field of a model M comprising a plurality of geobodies C1, C2, C3, C4. In the method 100, the transmissibility field may be optimized iteratively, in such a way that production data determined based on the transmissibility field match measured production data.

In the first iteration of the method 100, production data related to at least one location of the reservoir may be measured 101 at one or more producer wells P1, P2, P3, P4 by use of one or more sensors.

All further parts of the method 100 described hereafter may be implemented by a system 201 such as a computer (that will be described further in relation to figure 5).

The measured production data, also referred to as ground truth, may then be received 102 as input data of the system 201.

Furthermore, a model M comprising a plurality of cells and a plurality of geobodies C1, C2, C3, C4 in contact with each other in contact locations is received 103.

EP 2 956 804 A1 discloses a method for modeling a reservoir in which the volume in which the reservoir is to be modeled may be divided into cells. Initially, the parameters of only a small number of cells will be known with any degree of certainty (those which have been actually measured) and assumed values are used for the parameters of the remaining cells.

Returning to the method 100 of the present application, contact locations may then be determined 104.

Thus, contact locations in the form of contact regions may be determined 104' or contact locations in the form of pairs t3_1, t3_2, t3_3 of adjacent cells may then be determined 104".

When the contact locations are in the form of pairs t3_1, t3_2, t3_3 of adjacent cells, a list of pairs t3_1, t3_2, t3_3 of adjacent cells may be determined for the contact points, wherein each cell of a pair t3_1, t3_2, t3_3 of adjacent cells belongs to a different geobodies C1, C2, C3, C4. For example, for a given pair t3_1, t3_2, t3_3 of adjacent cells, one cell of the pair t3_1, t3_2, t3_3 may belong to one geobody C1 and another cell of the pair t3_1, t3_2, t3_3 may belong to another geobody C2. If the list comprises pairs t3_1, t3_2, t3_3 of adjacent cells with both cells of the pair t3_1, t3_2, t3_3 belonging to the same geobody C1, C2, C3, C4, these pairs t3_1, t3_2, t3_3 of adjacent cells may be filtered out in order to only keep pairs t3_1, t3_2, t3_3 with cells that belong to different geobodies C1, C2, C3, C4.

Furthermore, for each pair t3_1, t3_2, t3_3 of adjacent cells, a direction of contact may be established. Indeed, the flow in the reservoir is a vector field, and for properly modeling transmissibility in the model M, the direction of the flow (which is locally defined by the direction of contact of the geobodies C1, C2, C3, C4) may be taken into account. The direction of contact may be defined along the connection axis of the pair t3_1, t3_2, t3_3 of adjacent cells.

In addition, a transmissibility field comprising at least one transmissibility value for each contact location is received 105. This means that, when the contact locations are contact regions T1, T2, T3, one transmissibility value may be received for each contact region T1, T2, T3. When the contact locations are pairs t3_1, t3_2, t3_3 of adjacent cells, one transmissibility value is received for each pair t3_1, t3_2, t3_3 of cells.

The transmissibility is initially computed from adjacent cells petrophysics properties (permeability...) and the updated transmissibility values can be often multiplied by a factor in between [0 ; 1] during the history match process. A value of 0 means that no fluid is transmitted, and a value of 1 means that the transmissibility is maximum.

For example, the transmissibility values of the first iteration may be generated by latin hypercube sampling. Latin Hypercube Sampling (LHS) is a statistical method used to generate a near-random sample of parameter values from a multidimensional distribution. For more information about latin hypercube sampling, it is referred to M. D. McKay, R. J. Beckman, and W. J. Conover. "A comparison of three methods for selecting values of input variables in the analysis of output from a computer code". Technometrics, 21(2):239-245, 1979; and R. L. Iman, J. C. Helton, and J. E. Campbell. "An approach to sensitivity analysis of computer models, part 1. introduction, input variable selection and preliminary variable assessment." Journal of Quality Technology, 13(3):174-183, 1981. Unlike simple random sampling, where random points are selected from the parameter space, latin hypercube sampling aims to create a more representative and evenly distributed set of samples.

Then, production data may be determined 106 for said location of the reservoir, based on the transmissibility value of each contact location.

In order to determine 106 the production data, full-physics simulations based on Darcy flow assumptions using Darcy's equation are carried out. Therefore, an industry standard flow simulator may be employed (Eclipse, Intersect, IMEX, Nexus, tNavigator, MoReS, etc). Darcy's equation is often used in the form of a partial differential equation, wherein the so-called Darcy velocity u is determined:
$$u = -\frac{k}{\mu}\frac{\partial P}{\partial x},$$
where P is the pressure in the geobody and x is an axis oriented along the length of the geobody, $\mu$ is the dynamic viscosity of the fluid which portrays its resistance to flow, and k is the permeability of the geobody.

A mismatch between the determined production data and the measured production data may then be determined 107. Based on the mismatch, the transmissibility field may be updated 108, which involves updating some or all of the received transmissibility values of one or several contact locations, in such a way that the mismatch is reduced.

The updating 108 of the transmissibility field may be carried out by use of different tools such as an ensemble smoother, an ensemble Kalman filter, an iterative ensemble smoother or an ensemble smoother with multiple data assimilation, referred to as ES-MDA. In ES-MDA, all of the available data (i.e. one the one hand the measured production data and on the other hand parameters of the model M) are assimilated multiple times using an inflated covariance matrix with an inflation factor. ES-MDA is an iterative approach to the ensemble smoother, which allows obtaining better history match results when compared to an ensemble smoother without multiple data assimilation.

ES-MDA allows updating the transmissibility values and thus allows for an effective history matching process that captures flow dynamics in the reservoir.

For further details regarding the concept of ES-MDA, it is referred to A. Emerick et al., "Ensemble smoother with multiple data assimilation", Computers & Geosciences, 55:3-15, 2013.

The updated transmissibility field received as an output of the first iteration of the method 100 represent an improvement with respect to the transmissibility field received as an input of the first iteration, meaning that the model M based on the transmissibility field received as an output of the first iteration is a more realistic representation of the reservoir than the model M based on the transmissibility field received as an input of the first iteration.

The updated transmissibility values received as an output of the first iteration may then be received as input transmissibility values in the second iteration.

The above-mentioned portions 103- 108 of the method 100 may be repeated in the second iteration, in order to determine an updated transmissibility field as an output of the second iteration.

The method 100 may be iterated 109 until a predetermined stop criterion is reached. The stop criterion may be selected for instance among the following examples:

- the iterations are stopped after a determined number of iterations;
- the iterations are stopped once a sufficient convergence has been achieved, i.e. for instance when a mismatch value between measured production data and simulated production data becomes lower than a predetermined threshold.

In each iteration, it is expected that the simulated production data converge towards the measured production data, and that the resulting model M is a more realistic representation of the reservoir when compared to the initial model M.

Figure 4 is a graph G showing curves of production data determined during different iterations (first iterations SPR-I: thin solid lines; final iteration SPR-F: thick solid line) of the method 100 discussed in relation to figure 3 for the case that the contact locations are in the form of pairs t3_1, t3_2, t3_3 of adjacent cells, and a curve of measured production data MPR (represented by whisker bars). With increasing number of iterations, the simulated production data SPR-I, SPR-F converge towards the measured production data MPR.

A plurality of such simulations may be made in parallel.

This means that in the first iteration, a plurality of transmissibility fields comprising transmissibility values for each contact location are received 105.

For each received transmissibility field, the above-mentioned portions 103 - 108 of the method 100 may be carried out. Thus, a plurality of simulations may be made in parallel.

The method 100 may be iterated 109 until the predetermined stop criterion as mentioned above is reached.

Thus, each transmissibility field is optimized iteratively, and the plurality of optimized transmissibility fields may be output, for example on a computer screen and used further. For example, based on a predetermined criterion, one of these transmissibility fields may be picked for simulating fluid production. In another example, the average of the transmissibility fields may be determined and be used for simulating fluid production.

Carrying out parallel simulations also allows observing a general trend during the simulation. For example, the different transmissibility fields may exhibit considerable differences at the beginning, but these differences may be smoothed out with an increasing number of iterations, and all transmissibility fields may converge. The output of the method 100 may be a plurality of transmissibility fields, wherein the spread of the transmissibility fields offers insights into the most transmissibility values.

The disclosed method 100 allows creating a model M of a reservoir, wherein the model M is calibrated on measured production data and wherein subresolution features are taken into account by means of the transmissibility field, thus greatly improving the accuracy of the model M.

The different parts of the method 100 are not necessarily carried out in the indicated order. For example, the model M may be received 103 before the measured production data are received 102.

The optimized models M each comprising an optimized transmissibility field of the last iteration may be populated with mechanical/geological/petrophysical parameters, and may be further submitted to fluid flow simulations.

In particular, further simulations may be carried out to forecast future fluid flow in the reservoir and future production of fluids through producer wells P1, P2, P3, P4 in the reservoir.

The forecasted fluid flow in the reservoir and the forecasted production of fluids may be used for future use in geophysical tools. In particular, the forecasted fluid flow may allow determining a positions of wells to be drilled for operating the reservoir, in particular producer wells P1, P2, P3, P4 for fluid extraction or injector wells I1, I2 for fluid injection. For example, a producer well P1, P2, P3, P4 may be planned and drilled at a location where the fluid flow is highest or where the volume of stored fluid is highest, in order to maximize the fluid production.

Figure 5 shows a system 201 configured to implement at least a part of the method 100 described in relation to figure 3, in particular the parts of the method 100 after the measurement 101 of production data.

The system 201 may comprise a memory 204 for storing instructions for implementation of at least part of the method 100, the data received, and temporary data for performing the various blocks and operations of the method 100.

The system 201 further comprises a processing circuit 205. This processing circuit 205 can be, for example: a processor capable of interpreting instructions in the form of a computer program, or an electronic card whose blocks and operations of the method 100 are described in silicon, or a programmable electronic chip such as an FPGA for "Field-Programmable Gate Array", as a SOC for "System On Chip" or as an ASIC for "Application Specific Integrated Circuit".

SOCs or systems-on-chips are embedded systems that integrate all the components of an electronic system into a single chip. An ASIC is a dedicated electronic circuit that brings together custom features for a given application. The programmable logic circuits of the FPGA type are electronic circuits reconfigurable by the user of the system 201.

The system 201 comprises an input interface 202 for receiving messages or instructions, and an output interface 203 for communication with the electronic entities of the system 201 which implement the method 100 according to the present disclosure.

Depending on the embodiment, the system 201 may be a computer, a computer network, an electronic component, or another device comprising a processor operatively coupled to a memory 204, and, depending on the mode of operation, a data storage unit, and other associated hardware elements such as a network interface and a media reader for reading a removable storage medium 206 and writing on such a medium. The removable storage medium 206 may be, for example, a flash disk, a USB stick, etc.

According to the embodiment, the memory 204, the data storage unit or the removable storage medium 206 contain instructions which, when executed by the processor, cause this system 201 to performing or controlling the input interface 202, output interface 203, data storage in the memory 204 and / or data processing and described method implementation examples.

In addition, the instructions can be implemented in software form, in which case they take the form of a program executable by a processor, or in hardware form, as an integrated circuit specific application ASIC, a SOC on a microchip, or in the form of a combination of hardware and software elements, for example a software program intended to be loaded and executed on an electronic component described above such as FPGA processor.

The system 201 can also use hybrid architectures, for example architectures based on a CPU + FPGA, or an MPPA for "Multi-Purpose Processor Array".

## Claims

1. A computer-implemented method (100) for determining a transmissibility field of a model (M) of a reservoir comprising a plurality of geobodies (C1, C2, C3, C4), the method (100) comprising:

   - receiving (102) measured production data related to at least one location of the reservoir;
   - receiving (103) a model (M) of the reservoir comprising a plurality of geobodies (C1, C2, C3, C4) capable of conducting a fluid and in contact with each other;
   - determining (104) at least two contact locations between two geobodies (C1, C2, C3, C4) among said plurality of geobodies (C1, C2, C3, C4), and receiving (105) a transmissibility field comprising at least one transmissibility value for each contact location, each received transmissibility value being representative of a transmissibility of a fluid between the two geobodies (C1, C2, C3, C4) across a respective contact location among the at least two contact locations;
   - determining (106) production data for said location of the reservoir, based on the at least one received transmissibility value of each contact location;
   - based on a mismatch between the determined production data and the measured production data, updating (108) the transmissibility field, wherein at least one received transmissibility value of at least one contact location among said at least two contact locations is updated, in order to reduce the mismatch.

2. The method of claim 1, wherein at least one geobody of the geobodies (C1, C2, C3, C4) comprises a channel.

3. The method of any one of the previous claims, wherein said updating (108) of the transmissibility field in order to reduce the mismatch is carried out by an ensemble smoother with multiple data assimilation.

4. The method of any one of the previous claims, further comprising at least one iteration (109) of:

   - receiving (105) a transmissibility field comprising at least one transmissibility value for each contact location, wherein the at least one received transmissibility value for a respective contact location in a current iteration corresponds to the at least one updated transmissibility value for said contact location of a previous iteration;
   - determining (106) production data for said location of the reservoir, based on said received transmissibility field;
   - based on a mismatch between the determined production data and the measured production data, updating (108) the transmissibility field, wherein at least one received transmissibility value of at least one contact location among said at least two contact locations is updated, in order to reduce the mismatch.

5. The method of any one of the previous claims, further comprising:

   - receiving (105) a plurality of transmissibility fields, each transmissibility field comprising at least one transmissibility value for each contact location;
   - determining (106), for each received transmissibility field, production data for said location of the reservoir, based on the respective received transmissibility field;
   - for each received transmissibility field: based on a mismatch between the respective determined production data and the measured production data, updating (108) the transmissibility field, wherein at least one received transmissibility value of at least one contact location among said at least two contact locations is updated, in order to reduce the mismatch.

6. The method of any one of the previous claims, wherein the at least two contact locations comprise at least two contact regions (T1, T2, T3) separated from each other by at least one region in which the two geobodies (C1, C2, C3, C4) are not in contact with each other, and wherein receiving at least one transmissibility value for each contact location comprises receiving at least one transmissibility value for each contact region (T1, T2, T3).

7. The method of any one of the previous claims, wherein the model (M) of the reservoir comprises a plurality of cells, and wherein the at least two contact locations comprise at least two pairs (t3_1, t3_2, t3_3) of adjacent cells, wherein each cell of a pair (t3_1, t3_2, t3_3) among said pairs (t3_1, t3_2, t3_3) of adjacent cells belongs to a different geobody (C1, C2, C3, C4), and wherein receiving at least one transmissibility value for each contact location comprises receiving a transmissibility value for each pair (t3_1 , t3_2, t3_3) of adjacent cells.

8. The method of claim 7, wherein determining pairs (t3_1, t3_2, t3_3) of adjacent cells comprises:

   - creating a list of pairs (t3_1, t3_2, t3_3) of adjacent cells of said two geobodies (C1, C2, C3, C4);
   - filtering the list of pairs (t3_1, t3_2, t3_3) of adjacent cells in order to keep only pairs (t3_1, t3_2, t3_3) of adjacent cells belonging to different geobodies (C1, C2, C3, C4).

9. The method of any one of claims 7 and 8, wherein a direction of contact is determined for each pair (t3_1, t3_2, t3_3) of adjacent cells, and wherein determining production data for said location of the reservoir is further based on the direction of contact of the pairs (t3_1, t3_2, t3_3) of adjacent cells.

10. A computer program product comprising instructions which, when the instructions are executed by a processing circuit (205), cause the processing circuit (205) to implement a method (100) of any one of claims 1 - 9.

11. A system (201) for determining a transmissibility field of a model (M) of a reservoir comprising a plurality of geobodies (C1, C2, C3, C4), the system comprising:

- a first interface for receiving (102) measured production data related to at least one location of the reservoir;
- a second interface for receiving (103) a model (M) of the reservoir comprising a plurality of geobodies (C1, C2, C3, C4) capable of conducting a fluid and in contact with each other;
- a first circuit for determining (104) at least two contact locations between two geobodies (C1, C2, C3, C4) among said plurality of geobodies (C1, C2, C3, C4), and receiving (105) a transmissibility field comprising at least one transmissibility value for each contact location, each received transmissibility value being representative of a transmissibility of a fluid between the two geobodies (C1, C2, C3, C4) across a respective contact location among the at least two contact locations;
- a second circuit for determining production data for said location of the reservoir, based on the at least one received transmissibility value of each contact location;
- a third circuit for updating (108), based on a mismatch between the determined production data and the measured production data, the transmissibility field, wherein at least one received transmissibility value of at least one contact location among said at least two contact locations is updated, in order to reduce the mismatch.

FIG. 1

FIG. 2

**FIG. 3**

FIG. 4

**FIG. 5**

Europäisches
Patentamt

European
Patent Office

Office européen
des brevets

# EUROPEAN SEARCH REPORT

Application Number

EP 23 30 7139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Barrela Eduardo ET AL: "Coupling geologically consistent geostatistical history matching with parameter uncertainty quantification", <br><br> 11 October 2018 (2018-10-11), XP093147604, Retrieved from the Internet: URL:https://arxiv.org/ftp/arxiv/papers/1810/1810.06642.pdf [retrieved on 2024-04-03] * figures 1,2,10,11,15 * * the whole document * | 1-11 | INV. E21B43/12 G01V1/30 |
| X | US 2022/163692 A1 (HARRIS SIMON [GB] ET AL) 26 May 2022 (2022-05-26) * paragraphs [0023], [0040]; figure 1 * * paragraphs [0063] - [0077]; claims 1,10-16; figures 2-8 * | 1,10,11 | |
| A | US 2023/119861 A1 (WATANABE SHINGO [US] ET AL) 20 April 2023 (2023-04-20) * automatic history matching; paragraph [0069]; figures 3,5,8 * | 1 | TECHNICAL FIELDS SEARCHED (IPC) <br><br> E21B <br> G01V |
| A | US 2019/025460 A1 (MUSTAPHA HUSSEIN [GB]) 24 January 2019 (2019-01-24) * the whole document * | 1 | |
| L | BARRELA EDUARDO ET AL: "Four-Dimensional History Matching Using ES-MDA and Flow-Based Distance-to-Front Measurement", ENERGIES, vol. 16, no. 24, 9 December 2023 (2023-12-09), page 7984, XP093147570, CH ISSN: 1996-1073, DOI: 10.3390/en16247984 * pages 12-19; figures 11-15 * * the whole document * | | |

The present search report has been drawn up for all claims

| Place of search | Date of completion of the search | Examiner |
|---|---|---|
| The Hague | 5 April 2024 | van Berlo, André |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 567 251 A1

## ANNEX TO THE EUROPEAN SEARCH REPORT
## ON EUROPEAN PATENT APPLICATION NO.

EP 23 30 7139

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2024

| Patent document cited in search report | Publication date | Patent family member(s) | Publication date |
|---|---|---|---|
| US 2022163692 A1 | 26-05-2022 | EP 3956541 A1<br>US 2022163692 A1<br>WO 2020214635 A1 | 23-02-2022<br>26-05-2022<br>22-10-2020 |
| US 2023119861 A1 | 20-04-2023 | AU 2022252835 A1<br>CA 3178947 A1<br>EP 4170125 A1<br>US 2023119861 A1 | 04-05-2023<br>20-04-2023<br>26-04-2023<br>20-04-2023 |
| US 2019025460 A1 | 24-01-2019 | NONE | |

EPO FORM P0459

For more details about this annex : see Official Journal of the European Patent Office, No. 12/82

## REFERENCES CITED IN THE DESCRIPTION

**Patent documents cited in the description**

- EP 2956804 A1

- EP 2880471 A1

**Non-patent literature cited in the description**

- **J. GAILLOT et al.** LOSC' Simulation: A Key to Introduce Heterogeneities in Turbidite Channel Complexes (Offshore Congo). *SPE Annual Technical Conference and Exhibition. SPE.*, 2013
- **M. D. MCKAY** ; **R. J. BECKMAN** ; **W. J. CONOVER**. A comparison of three methods for selecting values of input variables in the analysis of output from a computer code. *Technometrics*, 1979, vol. 21 (2), 239-245

- **R. L. IMAN** ; **J. C. HELTON** ; **J. E. CAMPBELL.** An approach to sensitivity analysis of computer models, part 1. introduction, input variable selection and preliminary variable assessment.. *Journal of Quality Technology*, 1981, vol. 13 (3), 174-183
- **A. EMERICK et al.** Ensemble smoother with multiple data assimilation. *Computers & Geosciences*, 2013, vol. 55, 3-15